# EUROPEAN PATENT APPLICATION

(11) **EP 4 691 236 A1**
(43) Date of publication of application: **11.02.2026**
(21) Application number: 24784981.3
(22) Date of filing: 05.04.2024
(51) Int. Cl.: A01M 1/04, F21V 9/30

(54) **LIGHT SOURCE DEVICE, LIGHT REFLECTION MEMBER, AND TRANSLUCENT MEMBER**

(30) Priority: 06.04.2023 JP 2023061894
(71) Applicant: FKK Corporation, Kyoto-shi, Kyoto 601-8399 (JP); Hariyama, Takahiko, Hamamatsu-shi, Shizuoka 431-3125 (JP)
(72) Inventor: KAWATA, Kazuo, Kyoto-shi, Kyoto 601-8399 (JP); YOSHIDA, Kazuki, Kyoto-shi, Kyoto 601-8399 (JP); HARIYAMA, Takahiko, Hamamatsu-shi, Shizuoka 431-3125 (JP)
(74) Representative: Epping - Hermann - Fischer
(86) International application number: PCT/JP2024/014062
(87) International publication number: WO 2024/210199

(57) **Abstract**

A light source device emits light in which, among a plurality of types of visual cells including visual pigments having mutually different absorption wavelength bands that are wavelength bands of absorbed light, and constituting a part of an eye of an insect excited when light is absorbed by the visual pigment, as compared to excitability of visual cells including visual pigments having two absorption wavelength bands in which absorption peaks are separated, at least one visual cell including a visual pigment having an absorption wavelength band having an absorption peak between the absorption peaks of the two absorption wavelength bands has lower excitability.

## Description

### Technical Field

The present disclosure relates to a light source device, a light reflection member, and a translucent member.

### Background Art

An illumination system that includes two types of light sources that emit light having mutually different spectrum power distributions, and sets the spectrum power distribution of the light emitted from one light source to be a distribution having a higher attraction effect of an insect than that of the spectrum power distribution of the other light source, and can thus reduce displeasure given to a person located near the other light source by attracting and keeping the insect to the one light source of the two types of the light sources has been proposed (for example, see Patent Literature 1).

### Citation List

### Patent Literature

Patent Literature 1: Unexamined Japanese Patent Application Publication (Translation of PCT Application) No. 2017-509321

### Summary of Invention

### Technical Problem

In the illumination system as described in PTL 1, when the two types of the light sources are selected, a difference between a spectrum power distribution of light having a relatively high attraction effect of an insect and a spectrum power distribution of light having a relatively low attraction effect of the insect needs to be recognized. Thus, the inventors have clarified a difference between a spectrum power distribution of light having a relatively high attraction effect of an insect and a spectrum power distribution of light having a relatively low attraction effect of the insect, and have achieved a light source device, a light reflection member, and a translucent member that can acquire the attraction effect of the insect with a high degree of reliability.

The present disclosure has been made in view of the reasons described above, and has an objective to provide a light source device, a light reflection member, and a translucent member that can acquire an attraction effect of an insect with a high degree of reliability.

### Solution to Problem

In order to achieve the objective described above, a light source device according to the present disclosure emits light in which, among a plurality of types of visual cells including visual pigments having mutually different absorption wavelength bands that are wavelength bands of absorbed light, and constituting a part of an eye of an insect excited when light is absorbed by the visual pigment, as compared to excitability of visual cells including visual pigments having two absorption wavelength bands in which absorption peaks are separated, at least one visual cell including a visual pigment having an absorption wavelength band having an absorption peak between the absorption peaks of the two absorption wavelength bands has lower excitability.

### Advantageous Effects of Invention

According to the present disclosure, light in which, among a plurality of types of visual cells constituting a part of an eye of an insect, as compared to excitability of visual cells including visual pigments having two absorption wavelength bands in which absorption peaks are separated, at least one visual cell including a visual pigment having an absorption wavelength band having an absorption peak between the absorption peaks of the two absorption wavelength bands has lower excitability is emitted. In this way, an attraction effect of the insect can be acquired with a high degree of reliability.

### Brief Description of Drawings

FIG. 1A is a schematic diagram of an insect;
FIG. 1B is a schematic diagram illustrating an apposition eye of the insect;
FIG. 2A is a schematic diagram of an ommatidium of the insect;
FIG. 2B is an arrow cross-sectional view of the ommatidium of the insect taken along an A-A line in FIG. 2A;
FIG. 3 is a diagram illustrating an absorption wavelength band of a visual pigment included in each visual cell constituting a part of the eye of the insect;
FIG. 4A is an appearance photograph of a four o'clock flower;
FIG. 4B is a diagram illustrating a reflected light spectrum of a petal portion of the four o'clock flower;
FIG. 5 is a diagram illustrating a reflected light spectrum of a leaf portion of the four o'clock flower;
FIG. 6A is an appearance photograph of a toad lily;
FIG. 6B is a diagram illustrating a reflected light spectrum of a petal portion of the toad lily;
FIG. 7 is a diagram illustrating a reflected light spectrum of a leaf portion of the toad lily;
FIG. 8 is a diagram illustrating a spectroscopic spectrum of light that can acquire an attraction effect of the insect;
FIG. 9 is a schematic diagram of a compound eye of the insect;
FIG. 10A is a schematic diagram of the ommatidium of the insect;
FIG. 10B is a schematic diagram illustrating a case where a distance between a target object and the eye is relatively short;
FIG. 10C is a schematic diagram illustrating a case where the distance between the target object and the eye is relatively long;
FIG. 11 is a diagram illustrating spectroscopic spectra of light emitted from light source devices according to Example of Embodiment 1 and Comparative Example;
FIG. 12 is a diagram illustrating one example of a spectroscopic spectrum of light that greatly reduces an attraction effect of an insect according to Embodiment 2;
FIG. 13A is an appearance photograph of an oleander; and
FIG. 13B is a diagram illustrating a reflected light spectrum of a petal portion of the oleander.

### Description of Embodiments

### Embodiment 1

Hereinafter, embodiments of the present disclosure are described with reference to accompanying drawings. A light source device according to the present embodiment emits light in which, among a plurality of types of visual cells including visual pigments having mutually different absorption wavelength bands that are wavelength bands of absorbed light, and constituting a part of an eye of an insect excited (polarized) when light is absorbed by the visual pigment, as compared to excitability of visual cells including visual pigments having two absorption wavelength bands in which absorption peaks are separated, at least one visual cell including a visual pigment having an absorption wavelength band having an absorption peak between the absorption peaks of the two absorption wavelength bands has lower excitability.

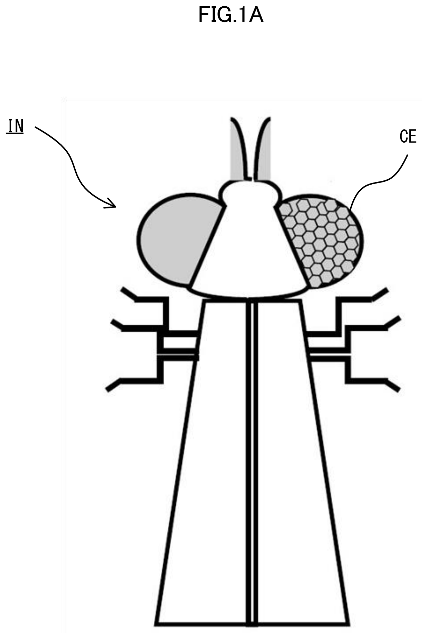

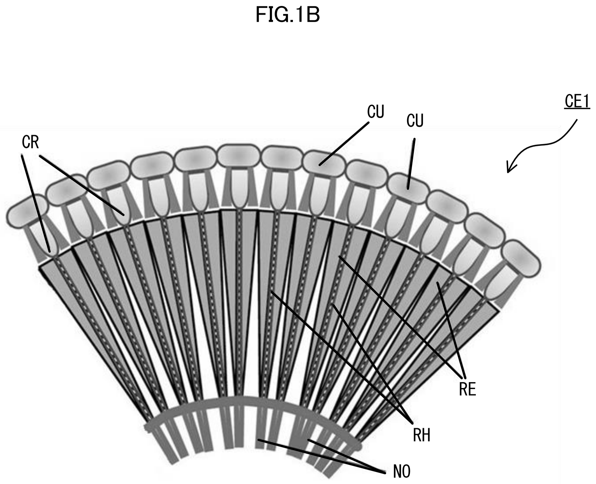

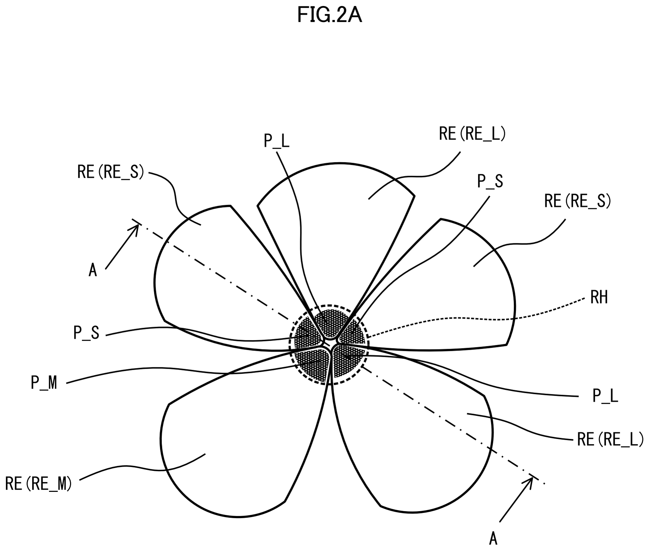

Herein, a structure of an eye of an insect as a premise of the present disclosure is described. An insect IN including a compound eye CE as illustrated in FIG. 1A includes, for example, an apposition eye CE1 acquired by a plurality of ommatidia gathering as illustrated in FIG. 1B. The apposition eye CE1 includes a plurality of corneas CU, a crystalline cone CR provided one by one for each of the plurality of corneas CU, a visual cell RE provided on a side opposite to the cornea CU side in the crystalline cone CR, and an optic nerve NO continued from the visual cell RE. A plurality of the visual cells RE is disposed in such a way as to surround an optical axis of a lens system including a pair of the cornea CU and the crystalline cone CR. Further, each of the plurality of visual cells RE includes a visual pigment having a mutually different absorption wavelength band that is a wavelength band of absorbed light. Then, for example, as illustrated in FIG. 2A, visual cells RE_L, RE_M, and RE_S are each disposed in such a way that visual pigment-containing portions P_L, P_M, and P_S including visual pigments are adjacent to each other, and thus a rhabdom RH including the visual pigment-containing portions P_L, P_M, and P_S is provided.

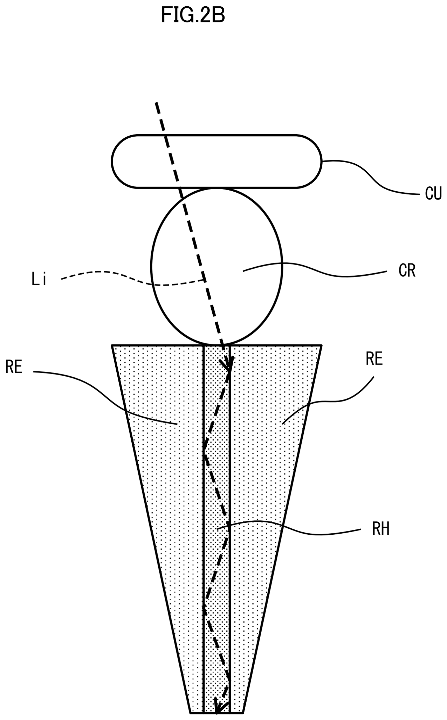

As illustrated in FIG. 2B, the rhabdom RH is provided in a portion adjacent to the lens system including the cornea CU and the crystalline cone CR. Each of the visual pigment-containing portions P_L, P_M, and P_L has a structure in which a great number of microvilli protrude, and includes the visual pigment in the microvillus. The rhabdom RH has a refractive index higher than that in a portion other than the visual pigment-containing portions P_L, P_M, and P_S of the visual cell RE, and functions as an optical waveguide for light incident on the rhabdom RH from the lens system including the cornea CU and the crystalline cone CR. Thus, as indicated by an arrow Li in FIG. 2B, the light incident on the rhabdom RH from the lens system including the cornea CU and the crystalline cone CR propagates through the rhabdom RH. Note that the insect IN also includes a superposition eye in which a transparent layer is interposed between the lens system including the plurality of corneas CU and the plurality of crystalline cones CR, and the visual cell RE.

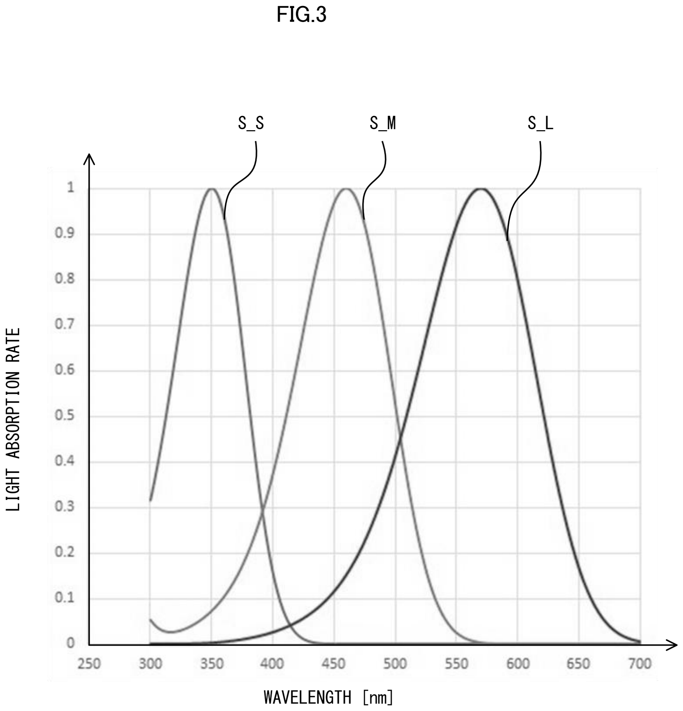

Further, the visual cells RE_L, RE_M, and RE_S respectively include the visual pigment-containing portions P_L, P_M, and P_S including the visual pigments having the mutually different absorption wavelength bands that are the wavelength bands of absorbed light. For example, as indicated by a curved line S_L in FIG. 3, the visual pigment-containing portion P_L including the visual pigment having the absorption wavelength band of 450 nm or more and 700 nm or less is provided in the visual cell RE_L, and, for example, as indicated by a curved line S_M in FIG. 3, the visual pigment-containing portion P_M including the visual pigment having the absorption wavelength band of, for example, 350 nm or more and 550 nm or less is provided in the visual cell RE_M. Further, for example, as indicated by a curved line S_S in FIG. 3, the visual pigment-containing portion P_S including the visual pigment having the absorption wavelength band of, for example, 300 nm or more and 400 nm or less is provided in the visual cell RE_S. The visual cell RE_L is excited when light having a wavelength band of 450 nm or more and 700 nm or less is absorbed by the visual pigment, and the visual cell RE_M is excited when light having a wavelength band of 350 nm or more and 550 nm or less is absorbed by the visual pigment. Further, the visual cell RE_L is excited when light having the wavelength band of 450 nm or more and 700 nm or less is absorbed by the visual pigment.

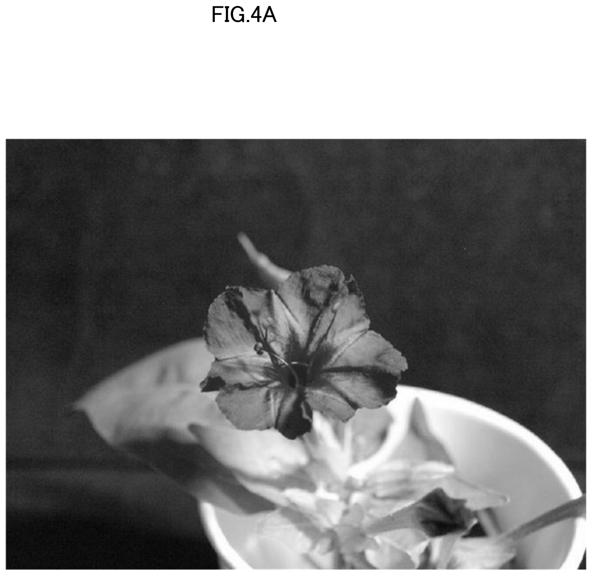

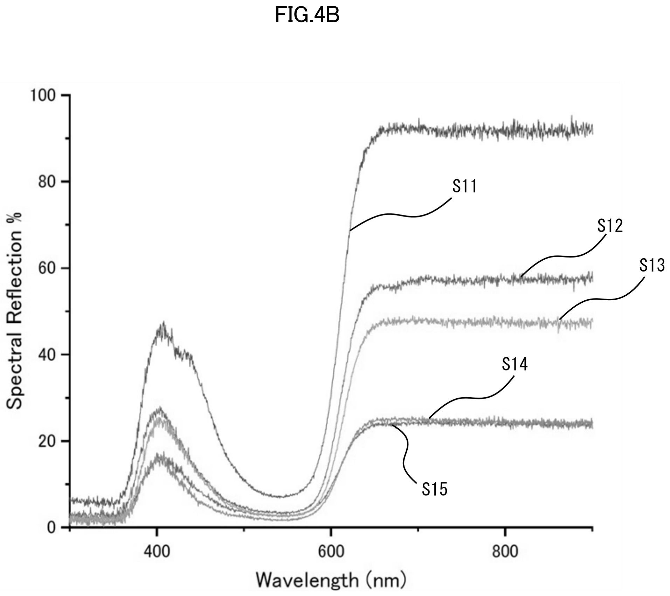

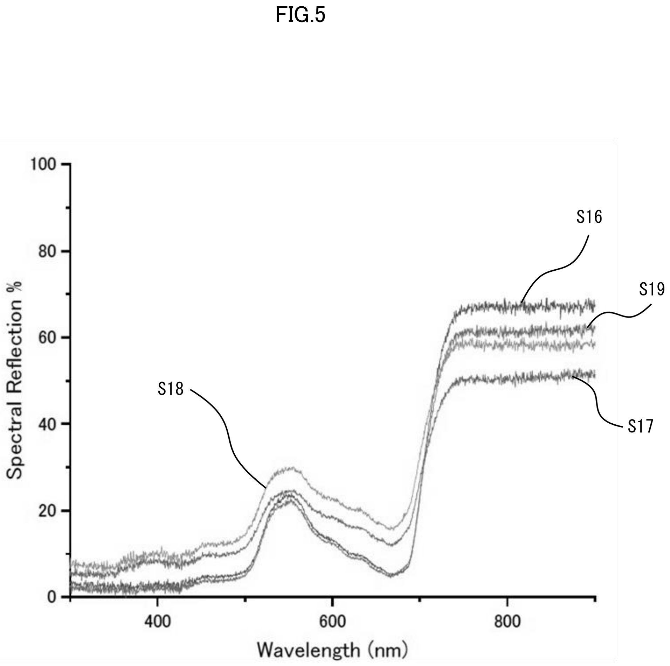

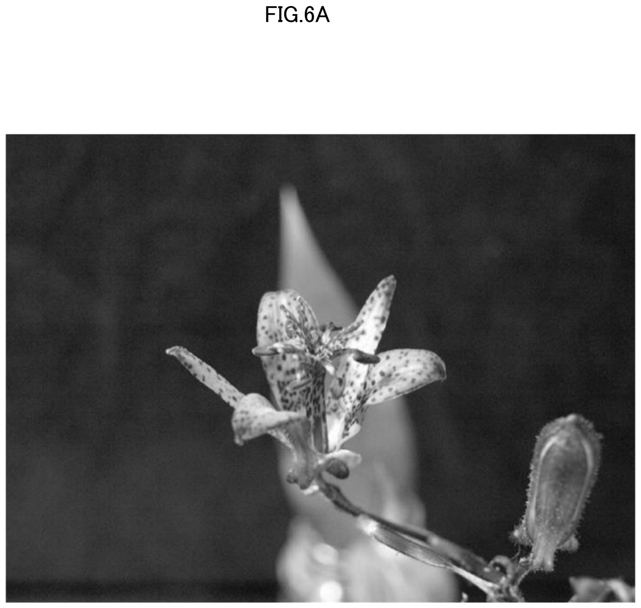

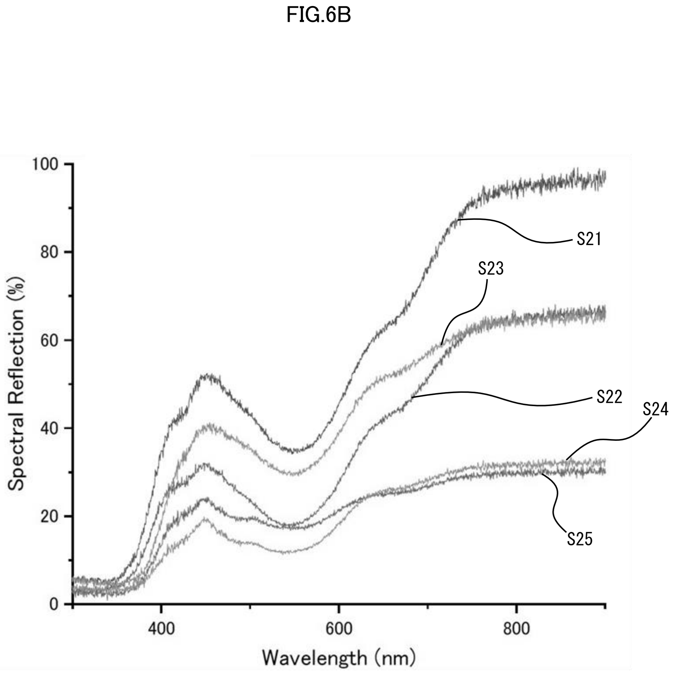

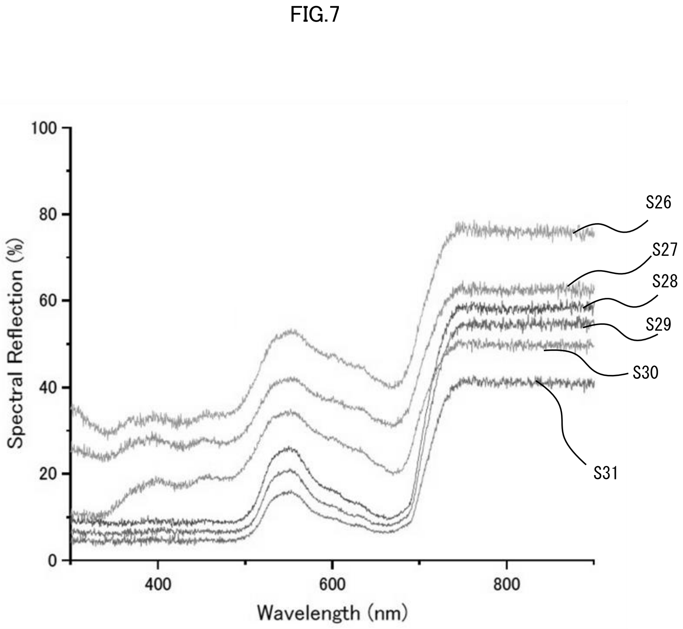

In consideration of the description above, the inventors have investigated a reflected light spectrum of a flower that attracts an insect present in the natural world. When a reflected light spectrum was measured for reflected light from each of five places of a petal portion of a "four o'clock flower" illustrated in FIG. 4A, as illustrated in FIG. 4B, reflected light spectra S11, S12, S13, S14, and S15 having lower intensity of a wavelength region of 500 nm or more and 600 nm or less than intensity of a wavelength region of about 400 nm and 650 nm or more were measured. Further, when a reflected light spectrum was measured for reflected light from each of four places of a leaf portion of the "four o'clock flower" illustrated in FIG. 4A, as illustrated in FIG. 5, reflected light spectra S16, S17, S18, and S19 having a smaller contrast between the intensity of the wavelength region of 500 nm or more and 600 nm or less and the intensity of the wavelength region of about 400 nm and 650 nm or more than that in the petal portion were measured. Furthermore, when a reflected light spectrum was measured for reflected light from each of five places of a petal portion of a "toad lily" illustrated in FIG. 6A, as illustrated in FIG. 6B, reflected light spectra S21, S22, S23, S24, and S25 having lower intensity of a wavelength region of about 550 nm than intensity of a wavelength region of about 450 nm and 650 nm or more were measured. Further, when a reflected light spectrum was measured for reflected light from each of six places of a leaf portion of the "toad lily" illustrated in FIG. 6A, as illustrated in FIG. 7, reflected light spectra S26, S27, S28, S29, S30, and S31 having a smaller contrast between the intensity of the wavelength region of about 550 nm and the intensity of the wavelength region of about 450 nm and 650 nm or more than that in the petal portion were measured. As a feature of a reflected light spectrum of a flower that attracts an insect, it has been shown from the results that there were peaks on a longer wavelength side and a shorter wavelength side, that is, that a bug was attracted to a flower that reflected light having a reflected light spectrum including a so-called valley having low intensity. Specifically, knowledge has been acquired that an insect was more likely to be attracted to a flower that reflected light having a reflected light spectrum in which a sum of intensity of each component corresponding to the absorption wavelength band of 300 nm or more and 400 nm or less of the visual pigment included in the visual cell RE_S, and a sum of intensity of each component corresponding to the absorption wavelength band of 450 nm or more and 700 nm or less of the visual pigment included in the visual cell RE_L were higher than a sum of intensity of each component corresponding to the absorption wavelength band of 350 nm or more and 550 nm or less of the visual pigment included in the visual cell RE_M. Further, since a bug tends to be more likely to be attracted to a petal portion than a leaf portion of a flower, it has been shown that the bug was more likely to be attracted with a greater contrast of intensity.

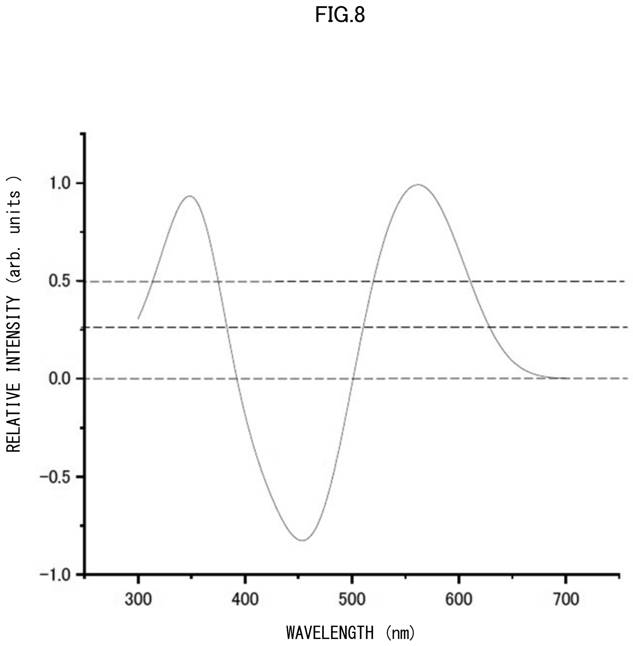

From this, the inventors have acquired knowledge that an attraction effect of an insect was high in a light source that emitted light having a spectroscopic spectrum in which the sum of the intensity of each component corresponding to the absorption wavelength band of 300 nm or more and 400 nm or less of the visual pigment included in the visual cell RE_S, and the sum of the intensity of each component corresponding to the absorption wavelength band of 450 nm or more and 700 nm or less of the visual pigment included in the visual cell RE_L were higher than the sum of the intensity of each component corresponding to the absorption wavelength band of 350 nm or more and 550 nm or less of the visual pigment included in the visual cell RE_M. In other words, knowledge has been acquired that an attraction effect of an insect was high in a light source that emitted light having a spectroscopic spectrum having an intensity peak in the wavelength band of 300 nm or more and 400 nm or less and the wavelength band of 450 nm or more and 700 nm or less, and including a valley portion of an intensity fall in the wavelength band of 350 nm or more and 550 nm or less as illustrated in FIG. 8.

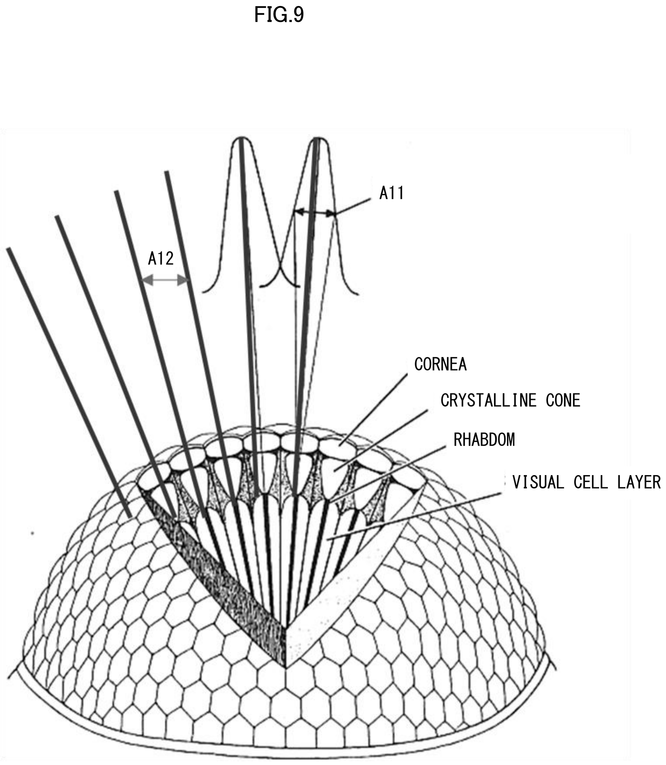

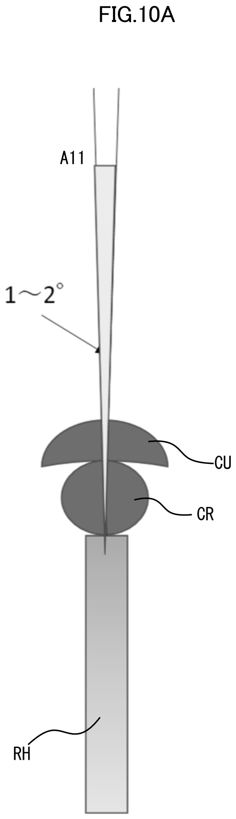

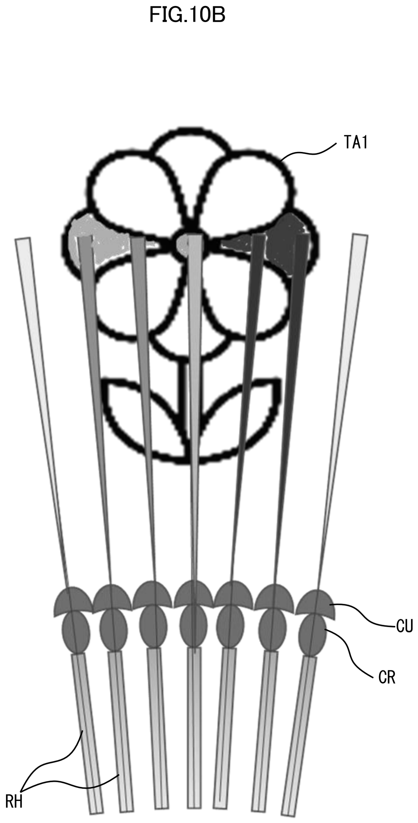

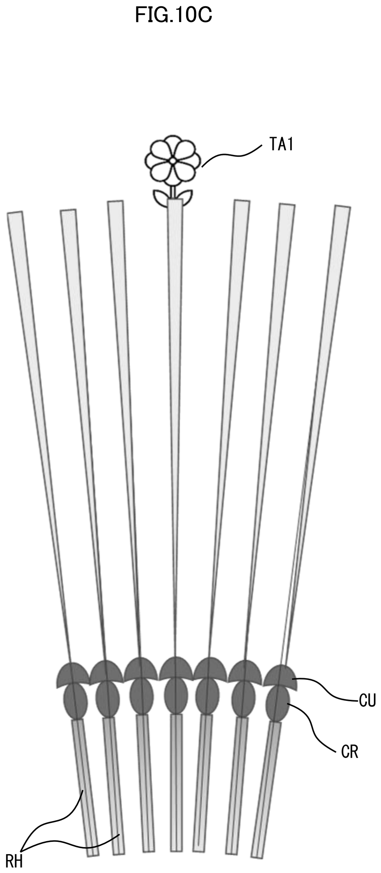

In an apposition eye or a superposition eye, light incident from a target object relatively far from the eye is incident on one ommatidium or a few ommatidia. Particularly, in a case of the superposition eye, light incident on a plurality of ommatidia is incident on one or a few rhabdoms. In this case, when the rhabdom is made of a visual cell excited by light having a different wavelength band, information about a wavelength of the light is held, and thus the information about the wavelength of the light can be discriminated. However, information about a so-called space such as a shape of a target object or a distance to the target object is lost. For example, as illustrated in FIG. 9, a world of space discrimination of an insect is determined by both of angular sensitivity A11 of an ommatidium and an inter-ommatidium angle Δφ. As illustrated in FIG. 10A, the angular sensitivity of each ommatidium is 1° to 2°. As illustrated in FIG. 10B, when the insect is located in a position near a flower, a great number of ommatidia each receive light, and thus space information can be received, a shape of the flower can be identified, and discernment of a wavelength also increases. In other words, with regard to a target object present near the insect, information about a shape and information about wavelength discrimination can be acquired. On the other hand, as illustrated in FIG. 10C, when the insect moves away from the flower, light can be received only by one or a few ommatidia due to an influence of the angular sensitivity A11 of the ommatidium and an ommatidium angle A12. Thus, information about a shape is deleted. In other words, with regard to a target object present in a position far away from the insect, a visible range is determined by the angular sensitivity A11 of each ommatidium and the inter-ommatidium angle A12. In an apposition eye, only a rhabdom of one ommatidium or a few ommatidia at most receives light, and thus information about a shape is deleted. Further, in a superposition eye, light incident on a cornea of many ommatidium condenses to a rhabdom of one ommatidium. The one rhabdom receives light from an outside world, and thus information about a shape is deleted. An insect has conceivably evolved in such a way as to distinguish a target object by using information about a contrast of a wavelength, that is, a spectroscopic spectrum including a so-called valley in order to survive by distinguishing the target object from a background without such information about a shape. From this, a possibility is conceivably high that a flower having an effect of attracting an insect causes stability of information acquisition for the insect by reflecting light having a reflected light spectrum having wavelength dependence as described above, that is, light having a contrast of intensity due to a so-called difference in a wavelength. In other words, it is conceivable that, in terms of a structure of an eye of an insect, the insect cannot recognize a shape of a target object located relatively far, and information about a waveform incident on an ommatidium, that is, information about a spectroscopic spectrum is an action trigger of attraction.

A light source device according to the present embodiment is invented based on the knowledge, and emits light in which, among a plurality of types of visual cells constituting a part of an eye of an insect, as compared to a degree of excitation of visual cells including visual pigments having two absorption wavelength bands in which absorption peaks are separated, at least one visual cell including a visual pigment having an absorption wavelength band having an absorption peak between the absorption peaks of the two absorption wavelength bands has a lower degree of excitation. The light source device includes: for example, at least one emitter that emits light that excites a visual cell including a visual pigment having an absorption wavelength band on a shorter wavelength side of the two absorption wavelength bands in which the absorption peaks are separated; and a light conversion member that converts light emitted from the at least one emitter into light that excites a visual cell including a visual pigment having an absorption wavelength band on a longer wavelength side of the two absorption wavelength bands in which the absorption peaks are separated. Herein, the at least one emitter emits light having a spectroscopic spectrum in which intensity is maximum in a wavelength band of 300 nm or more and 400 nm or less, for example. Further, for example, the light conversion member has translucency and emits light having a spectroscopic spectrum in which intensity is maximum in a wavelength band of 460 nm or more and 700 nm or less by being pumped by light emitted from the at least one emitter. Note that light emitted from the light source device more preferably has a difference absolute value between maximum intensity of a peak portion and minimum intensity of a valley portion of a spectroscopic spectrum of the light greater than 40% of the maximum intensity of the spectroscopic spectrum. Further, examples of the light source device may include, for example, a light source device in which an emitter that emits light that excites only the visual cell including the visual pigment having the absorption wavelength band on the shorter wavelength side of the two absorption wavelength bands in which the absorption peaks described above are separated, and an emitter that emits only light that excites the visual cell including the visual pigment having the absorption wavelength band on the longer wavelength side of the two absorption wavelength bands in which the absorption peaks are separated are disposed in proximity. Specifically, for example, in the light source device, the emitter that emits light having a spectroscopic spectrum in which intensity is maximum in the wavelength band of 300 nm or more and 400 nm or less, and the emitter that emits light having a spectroscopic spectrum in which intensity is maximum in the wavelength band of 460 nm or more and 700 nm or less may be disposed in proximity.

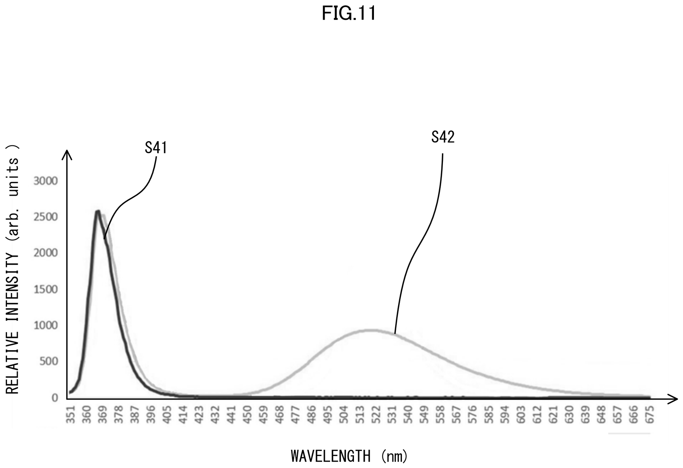

Herein, a result of comparing collection amounts of bugs of each of bug collectors using light source devices according to Example of the present disclosure and Comparative Example is described. As the light source device according to Comparative Example, a light source device that emitted light having a spectroscopic spectrum having unimodality in which a peak was present only in a wavelength region of ultraviolet light of a peak wavelength of 367nm was adopted. On the other hand, as the light source device according to Example of the present disclosure, a light source device that emitted light having a spectroscopic spectrum having bimodality in which a peak of relative intensity was present in each of a wavelength region of ultraviolet light of a wavelength of 367 nm and a wavelength region of a wavelength of 519 nm was adopted. Spectroscopic spectra of light emitted from the light source devices according to Example and Comparative Example are illustrated in FIG. 11. Note that, in FIG. 11, a curved line S41 indicates the spectroscopic spectrum of the light emitted from the light source device according to Comparative Example, and a curved line S42 indicates the spectroscopic spectrum of the light emitted from the light source device according to Example. Collection amounts of bugs when the bug collectors using the light source devices according to Example and Comparative Example were installed in a vicinity of a riverside area of the Katsura River in Kyoto City, and were left in a state where the light source device of each of the bug collectors was lit from June 11, 2021 to June 27, 2021 are illustrated in Table 1 below.

**[Table 1]**

| | COLLECTION AMOUNT [g] |
|---|---|
| EXAMPLE | 10.919 |
| COMPARATIVE EXAMPLE | 3.527 |

As illustrated in Table 1, it has been shown that the collection amount of bugs of the bug collector using the light source device according to Example was greater than the collection amount of bugs of the bug collector using the light source device according to Comparative Example. It is shown from the result that a higher bug collection effect can be acquired by adopting a light source device that emits, like the light source device according to Example, light having a spectroscopic spectrum having bimodality in which a peak of relative intensity is present in both a wavelength band of ultraviolet light and a wavelength band of a wavelength of 460 nm or more and 640 nm or less.

As a result, the light source device according to the present embodiment emits light in which, among a plurality of types of visual cells, as compared to excitability of visual cells including visual pigments having two absorption wavelength bands in which absorption peaks are separated, at least one visual cell including a visual pigment having an absorption wavelength band having an absorption peak between the absorption peaks of the two absorption wavelength bands has lower excitability. In this way, an attraction effect of an insect can be acquired with a high degree of reliability.

### Embodiment 2

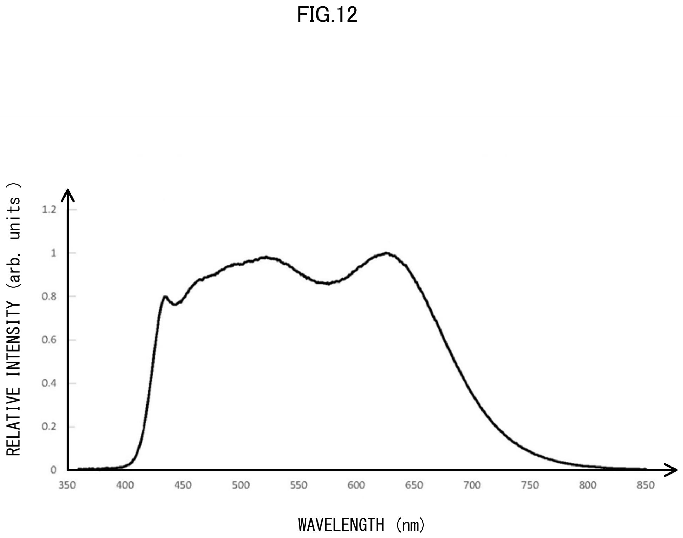

A light source device according to the present embodiment is invented based on the knowledge described in Embodiment 1, and emits light in which, among a plurality of types of visual cells including visual pigments having mutually different absorption wavelength bands that are wavelength bands of absorbed light, and constituting a part of an eye of an insect excited when light is absorbed by the visual pigment, only one visual cell is excited, or a plurality of visual cells including visual pigments having absorption wavelength bands in which absorption peaks are adjacent to each other is excited. For example, the light source device emits light that excites a plurality of visual cells including visual pigments having absorption wavelength bands in which absorption peaks are adjacent to each other, and that has a difference absolute value between maximum intensity of a peak portion and minimum intensity of a valley portion of a spectroscopic spectrum in the absorption wavelength bands of the visual pigments included in the plurality of visual cells being 40% or less of the maximum intensity of the spectroscopic spectrum. For example, a difference absolute value between maximum intensity of intensity of a peak portion and minimum intensity of a valley portion in a wavelength band in which a spectroscopic spectrum of light emitted from the light source device is 340 nm or more and 700 nm or less may be 40% or less of the maximum intensity of the spectroscopic spectrum. Note that, for example, as illustrated in FIG. 12, the light source device preferably emits light having a difference absolute value between maximum intensity and minimum intensity of intensity in a wavelength band of 430 nm or more and 630 nm or less being 25% or less of the maximum intensity.

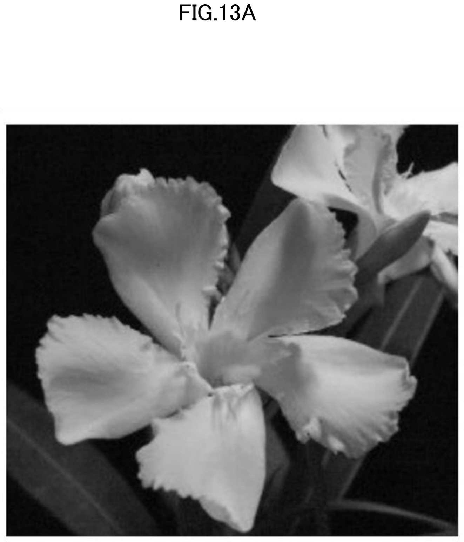

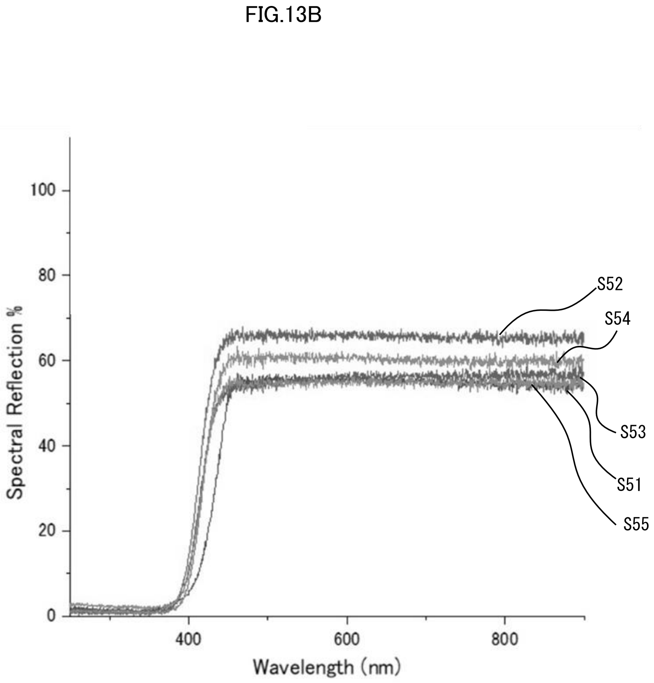

Further, the inventors have acquired knowledge that a flower seen to be white was present among flowers that attracted an insect present in the natural world. Thus, a reflected light spectrum of a flower that attracts the insect and is seen to be white was investigated. When a reflected light spectrum was measured for reflected light from each of five places of a petal portion of an "oleander" illustrated in FIG. 13A, as illustrated in FIG. 13B, reflected light spectra S51, S52, S53, S54, and S55 having higher intensity of a wavelength region of 400 nm or more than intensity of a wavelength region of less than 400 nm were measured. As a feature of a reflected light spectrum of a flower that attracts an insect, it has been shown from the results that a bug was also attracted to a flower that reflected light having a reflected light spectrum similar to a light spectrum of so-called white light in which entire intensity on a longer wavelength side of 400 nm or more was high. Specifically, knowledge has been acquired that an insect was also more likely to be attracted to a flower that reflects light having a reflected light spectrum in which each of a sum of intensity of each component corresponding to the absorption wavelength band of 450 nm or more and 700 nm or less of the visual pigment included in the visual cell RE_L, and a sum of intensity of each component corresponding to the absorption wavelength band of 350 nm or more and 550 nm or less of the visual pigment included in the visual cell RE_M is higher than a sum of intensity of each component corresponding to the absorption wavelength band of 300 nm or more and 400 nm or less of the visual pigment included in the visual cell RE_S.

From this, the inventors have acquired knowledge that an attraction effect of an insect was also high in a light source that emitted light having a spectroscopic spectrum in which each of the sum of the intensity of each component corresponding to the absorption wavelength band of 450 nm or more and 700 nm or less of the visual pigment included in the visual cell RE_L, and the sum of the intensity of each component corresponding to the absorption wavelength band of 350 nm or more and 550 nm or less of the visual pigment included in the visual cell RE_M was higher than the sum of the intensity of each component corresponding to the absorption wavelength band of 300 nm or more and 400 nm or less of the visual pigment included in the visual cell RE_S. In other words, knowledge has been acquired that an attraction effect of an insect was high in a light source that emitted light having a spectroscopic spectrum having an intensity peak in the wavelength band of 350 nm or more and 550 nm or less and an intensity peak in the adjacent wavelength band of 450 nm or more and 700 nm or less, and including a portion of an intensity fall in the wavelength band of 300 nm or more and 400 nm or less.

A light source device that greatly reduces an attraction effect of an insect with a high degree of reliability is desired in order to reduce displeasure given to a person located near the light source device. In contrast, the light source device according to the present embodiment emits light in which, among a plurality of types of visual cells including visual pigments having mutually different absorption wavelength bands that are wavelength bands of absorbed light, and constituting a part of an eye of an insect excited when light is absorbed by the visual pigment, only one visual cell is excited, or a plurality of visual cells including visual pigments having absorption wavelength bands in which absorption peaks are adjacent to each other is excited. In this way, the attraction effect of an insect is greatly reduced.

Although each of the embodiments of the present disclosure has been described above, the present disclosure is not limited to each of the embodiments described above. For example, when light is incident, a light reflection member may reflect light in which, among a plurality of types of visual cells that includes visual pigments having mutually different absorption wavelength bands, and is excited when light is absorbed by the visual pigment, as compared to excitability of visual cells including visual pigments having two absorption wavelength bands in which absorption peaks are separated, at least one visual cell having an absorption wavelength band including a visual pigment having an absorption peak between the absorption peaks of the two absorption wavelength bands has lower excitability. Note that examples of the reflection member may include, for example, a reflection member in which a first reflector that reflects light that excites only the visual cell including the visual pigment having the absorption wavelength band on a shorter wavelength side of the two absorption wavelength bands in which the absorption peaks described above are separated, and a second reflector that reflects only light that excites the visual cell including the visual pigment having the absorption wavelength band on a longer wavelength side of the two absorption wavelength bands in which the absorption peaks are separated are disposed in proximity.

Further, when light is incident, a light reflection member may reflect light in which, among a plurality of types of visual cells including visual pigments having mutually different absorption wavelength bands that are wavelength bands of absorbed light, and constituting a part of an eye of an insect excited when light is absorbed by the visual pigment, only one visual cell is excited, or a plurality of visual cells including visual pigments having absorption wavelength bands in which absorption peaks are adjacent to each other is excited.

Furthermore, a translucent member may transmit light in which, among a plurality of types of visual cells that includes visual pigments having mutually different absorption wavelength bands that are wavelength bands of absorbed light, and is excited when light is absorbed by the visual pigment, as compared to excitability of visual cells including visual pigments having two absorption wavelength bands in which absorption peaks are separated, at least one visual cell including a visual pigment having an absorption wavelength band having an absorption peak between the absorption peaks of the two absorption wavelength bands has lower excitability. Note that examples of the translucent member may include, for example, a translucent member in which a first translucent member that transmits light that excites only the visual cell including the visual pigment having the absorption wavelength band on a shorter wavelength side of the two absorption wavelength bands in which the absorption peaks described above are separated, and a second translucent member that transmits only light that excites the visual cell including the visual pigment having the absorption wavelength band on a longer wavelength side of the two absorption wavelength bands in which the absorption peaks are separated are disposed in proximity.

Further, a translucent member may transmit light in which, among a plurality of types of visual cells that includes visual pigments having mutually different absorption wavelength bands that are wavelength bands of absorbed light, and that is excited when light is absorbed by the visual pigment, only one visual cell is excited, or a plurality of visual cells including visual pigments having absorption wavelength bands in which absorption peaks are adjacent to each other is excited.

Although the embodiments and the modification examples of the present disclosure have been described above, the present disclosure is not limited to these. The present disclosure includes the embodiments and the modification examples being appropriately combined and also the embodiments and the modification examples being appropriately added with modifications.

This application claims the benefit of Japanese Patent Application No. 2023-061894, filed on April 6, 2023, the entire disclosure of which is incorporated by reference herein.

### Industrial Applicability

A light source device according to the present disclosure is suitable as a light source device for a measure against insect harm by insects and worms.

### Reference Signs List

CE Compound eye
CE1 Apposition eye
CR Crystalline cone
CU Cornea
NO Optic nerve
P_L, P_M, P_S Visual pigment-containing portion
RE, RE_L, RE_M, RE_S Visual cell
RH Rhabdom

## Claims

1. A light source device that emits light in which, among a plurality of types of visual cells including visual pigments having mutually different absorption wavelength bands that are wavelength bands of absorbed light, and constituting a part of an eye of an insect excited when light is absorbed by the visual pigment, as compared to excitability of visual cells including visual pigments having two absorption wavelength bands in which absorption peaks are separated, at least one visual cell including a visual pigment having an absorption wavelength band having an absorption peak between the absorption peaks of the two absorption wavelength bands has lower excitability.

2. The light source device according to claim 1, comprising:
at least one emitter that emits light that excites a visual cell including a visual pigment having an absorption wavelength band on a shorter wavelength side of the two absorption wavelength bands in which the absorption peaks are separated; and
a light conversion member that converts light emitted from the at least one emitter into light that excites a visual cell including a visual pigment having an absorption wavelength band on a longer wavelength side of the two absorption wavelength bands in which the absorption peaks are separated as compared to the emitted light.

3. The light source device according to claim 2, wherein
the at least one emitter emits light having a spectroscopic spectrum in which intensity is maximum in a wavelength band of 300 nm or more and 400 nm or less, and
the light conversion member has translucency and emits light having a maximum spectroscopic spectrum in a wavelength band of 460 nm or more and 700 nm or less by being pumped by light emitted from the at least one emitter.

4. The light source device according to any one of claims 1 to 3, wherein
a difference absolute value between maximum intensity of a peak portion and minimum intensity of a valley portion of a spectroscopic spectrum of light emitted from the light source device is greater than 40% of the maximum intensity of the spectroscopic spectrum.

5. A light source device that emits light in which, among a plurality of types of visual cells including visual pigments having mutually different absorption wavelength bands that are wavelength bands of absorbed light, and constituting a part of an eye of an insect excited when light is absorbed by the visual pigment, only one visual cell is excited, or a plurality of visual cells including visual pigments having absorption wavelength bands in which absorption peaks are adjacent to each other is excited.

6. The light source device according to claim 5, wherein
the light source device emits light that excites a plurality of visual cells including visual pigments having absorption wavelength bands in which absorption peaks are adjacent to each other, and that has a difference absolute value between maximum intensity of a peak portion and minimum intensity of a valley portion of a spectroscopic spectrum of light emitted from the light source device in the absorption wavelength bands of the visual pigments included in the plurality of visual cells being 40% or less of the maximum intensity of the spectroscopic spectrum.

7. The light source device according to claim 6, wherein
a difference absolute value between maximum intensity of intensity of a peak portion and minimum intensity of a valley portion in a wavelength band of 340 nm or more and 700 nm or less of the spectroscopic spectrum is 40% or less of the maximum intensity of the spectroscopic spectrum.

8. A light reflection member that, when light is incident, reflects light in which, among a plurality of types of visual cells including visual pigments having mutually different absorption wavelength bands that are wavelength bands of absorbed light, and constituting a part of an eye of an insect excited when light is absorbed by the visual pigment, as compared to excitability of visual cells including visual pigments having two absorption wavelength bands in which absorption peaks are separated, at least one visual cell having an absorption wavelength band including a visual pigment having an absorption peak between the absorption peaks of the two absorption wavelength bands has lower excitability.

9. A light reflection member that, when light is incident, reflects light in which, among a plurality of types of visual cells including visual pigments having mutually different absorption wavelength bands that are wavelength bands of absorbed light, and constituting a part of an eye of an insect excited when light is absorbed by the visual pigment, only one visual cell is excited, or a plurality of visual cells including visual pigments having absorption wavelength bands in which absorption peaks are adjacent to each other is excited.

10. A translucent member that transmits light in which, among a plurality of types of visual cells including visual pigments having mutually different absorption wavelength bands that are wavelength bands of absorbed light, and constituting a part of an eye of an insect excited when light is absorbed by the visual pigment, as compared to excitability of visual cells including visual pigments having two absorption wavelength bands in which absorption peaks are separated, at least one visual cell including a visual pigment having an absorption wavelength band having an absorption peak between the absorption peaks of the two absorption wavelength bands has lower excitability.

11. A translucent member that transmits light in which, among a plurality of types of visual cells including visual pigments having mutually different absorption wavelength bands that are wavelength bands of absorbed light, and constituting a part of an eye of an insect excited when light is absorbed by the visual pigment, only one visual cell is excited, or a plurality of visual cells including visual pigments having absorption wavelength bands in which absorption peaks are adjacent to each other is excited.
